# EUROPEAN PATENT SPECIFICATION

(11) **EP 0 839 705 B1**
(45) Date of publication and mention of the grant of the patent: **10.07.2002**
(21) Application number: 97303224.6
(22) Date of filing: 12.05.1997
(51) Int. Cl.: B62D 55/075, A61G 5/06

(54) **A stair climbing vehicle for a wheelchair and method of operating a stair climbing vehicle**
Treppensteigendes Fahrzeug zum Transport eines Rollstuhls und Verfahren zum Betreiben eines treppensteigenden Fahrzeugs
Véhicule pour faire monter un escalier à un fauteuil roulant et procédé pour faire marcher un tel véhicule

(30) Priority: 29.10.1996 JP 28675396
(43) Date of publication of application: 06.05.1998
(73) Proprietor: Sunwa Ltd., Tokyo (JP)
(72) Inventor: Misawa, Rintaro, Tokorozawa-shi, Saitama-ken, 350-13 (JP)
(74) Representative: Brookes Batchellor

(56) References cited:
- EP-A- 0 226 489
- US-A- 4 432 425
- US-A- 4 566 551
- US-A- 5 036 929
- PATENT ABSTRACTS OF JAPAN vol. 016, no. 446 (M-1311), 17 September 1992 & JP 04 154493 A (SANWA SHIYARIYOU KK), 27 May 1992,

## Description

The present invention relates to a stair-climbing vehicle, in particular to a stair-climbing vehicle for transporting a wheelchair with a person sitting on it.

The applicant has disclosed a stair-climbing vehicle for a wheelchair in Japanese Patent Application Laid-open No. 4-154493, illustrated in Fig. 7. The illustrated conventional stair-climbing vehicle comprises a crawler device a which includes a pair of endless belt crawlers each of sufficient length to extend over at least two steps of a stairway while climbing up or down the stairway. A load-carrying platform C is provided for holding a wheelchair with a person sitting on it. Two pairs of travelling wheels C1 with one pair provided under a front portion of the load-carrying platform C and another pair provided under the rear portion thereof. An electric actuator b is provided for pivotally raising the load-carrying platform C. An operation handle d is useful for operating the stairclimbing vehicle.

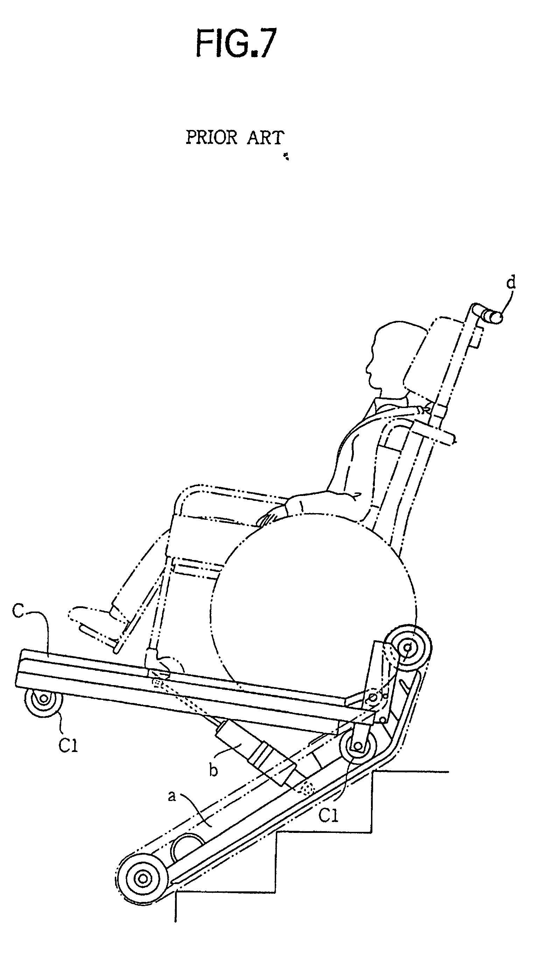

When travelling on horizontal ground, the electric actuator b is retracted so that all the travelling wheels C1 engage the ground. When climbing up or down a stairway, a change-over switch (not shown) provided on the operation handle d is operated to cause the cylinder b to extend, so that the load-carrying platform C is pivotally raised up to form an angle of 40° with respect with the crawler device, as shown in Fig 7. In this way a person sitting on the wheelchair may be moved up or down a stairway with his wheelchair slightly inclined to the rear at an angle of 5°-10° to the horizontal plane, to prevent an uncomfortable or even a terrible feeling.

When the stair-climbing vehicle is climbing up or down a stairway which has only a small incline angle with the horizontal plane, the load carrying platform will be inclined to the rear too much if the load-carrying platform remains at an angle of 4° with respect to the crawler device. Because the load carrying platform is rearwardly inclined too much, a person sitting on the wheelchair will feel uncomfortable or even frightened. In order to solve such a problem, it has been suggested that an inclination sensing/controlling device be provided to detect the angle. But, if the conventional inclination sensing/controlling device is employed it substantially increases the manufacturing cost of the stair climbing vehicle.

The reader may be further enlightened as to the state of the art by reference to the prior art publication United States Patent 4566551, with respect to which the invention defined in claim 1 is characterised.

To alleviate the aforementioned technical problem the present invention provides a stair climbing vehicle for transporting a wheelchair with a person sitting on it in accordance with claim 1.

According to another aspect of the present invention there is provided a method of operating a stair climbing vehicle according to claim 7.

In the present invention the first inclination sensing element may be inclined forming an angle α with a horizontal line of the load-carrying platform, preferably the angle α is 13°-18°. The second inclination sensing element is inclined forming an angle β with an extended line of the first inclination sensing member, preferably the angle β is 5° - 10°.

The fluid electrically conductive material may be mercury.

Preferably the crawler device includes a front operating member and a rear operating member, which are connected with each other and are capable of cooperating into an inverted "V" through a mutually connected point. A an extensible and retractable rod of an electric actuator rod may be connected to the rear operating member near the mutually connected point, such that the front operating member and the rear operating member are normally kept straight, but will be formed into an inverted "V" by retracting movement, so as to effect a smooth movement of the stair-climbing vehicle from a stairway to a horizontal ground surface, or vice versa.

A stair climbing vehicle constructed according to the present invention will now be described, by way of example, with reference to the accompanying figures, in which:
Fig. 1 is a side elevation of the vehicle,
Fig. 2 is a side elevation of the vehicle showing immediately before climbing up a stairway,
Fig. 3 is a side elevation of the vehicle beginning to climb the stairway,
Fig. 4 is a side elevation showing the stairclimbing vehicle climbing a stairway,
Fig. 5 is a side elevation showing the stairclimbing vehicle arriving at a horizontal floor from a stairway,
Figs. 6a - 6h indicate electric circuits for controlling the pivoting movement of the load-carrying platform of the stair-climbing vehicle.

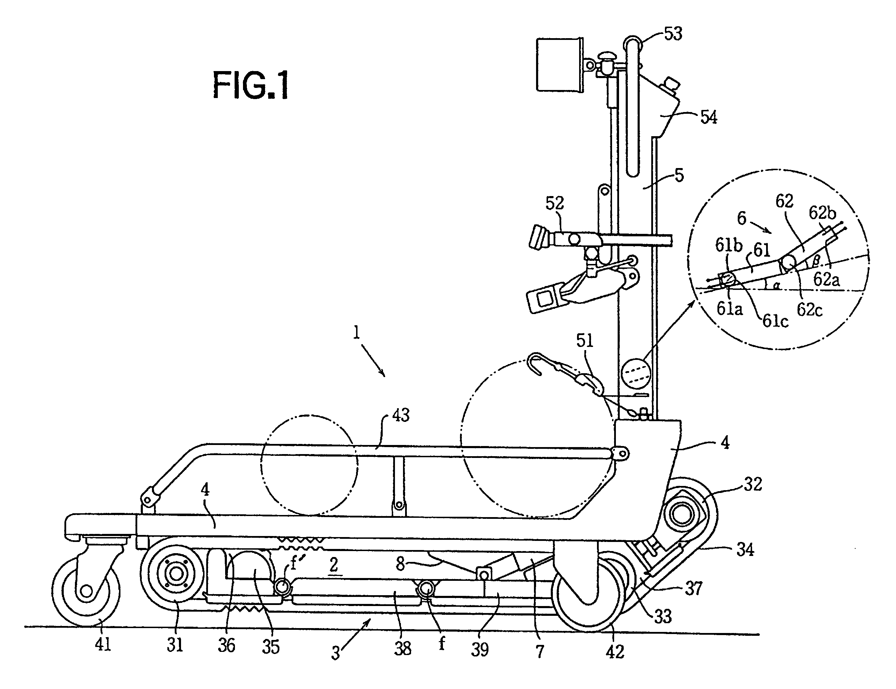

Referring to Fig. 1, a stair-climbing vehicle 1 has a vehicle body 2, a crawler device 3 including a pair of endless belt crawlers disposed one each on opposite sides of the vehicle body 2, a load-carrying platform 4 provided on the vehicle body 2 so as to be vertically pivotable about one end. An upright stand 5 is provided on the rear end of the load-carrying platform 4, and an inclination sensor 6 is provided on the upright stand 5.

The crawler device 3 includes a pair of front driving wheels 31, provided at the front, a pair of rear driven wheels 32 and a pair of rotating wheels 33 disposed close to the rear driven wheels 32. A pair of endless belt crawlers 34 are arranged to pass around and engage with the driving wheels 31 the driven wheels 32 and the rotating wheels 32. A driving motor 35 and a speed reducer 36 are mounted in the front portion of the vehicle body 2. An first electric actuator 7 and second electric actuator 8 are provided in the vehicle body 2. Also provided in the vehicle body 2 are a battery for supplying electric power to the motor 35, the first electric actuator 7 and second electric actuator 8. Some electric elements 37 are mounted on the vehicle body 2.

Between the driving wheels 31 and the rotating wheels 33 are provided a pair of front operating members 38 and a pair of rear operating members 39. The front operating members 38 and the rear operating members 39 are pivotally supported on the crawler device 3. Each front operating member 38 and each rear operating member 39 is connected by a pivot at a connection point f to articulate to form an inverted "V". A further pivoting connection point f' connects the front operating member 38 with the crawler device 3.

An extensible rod portion of the first actuator 7 is connected to the rear operating member 39 near the connection point f. The first electric actuator 7 may be operated to extend or retract in response to a signal from the inclination sensor 6. The sensor 6 is provided so that as soon as it detects that the stair-climbing vehicle 1 has climbed up to reach the uppermost step of a stairway, the first electric actuator 7 will retract.

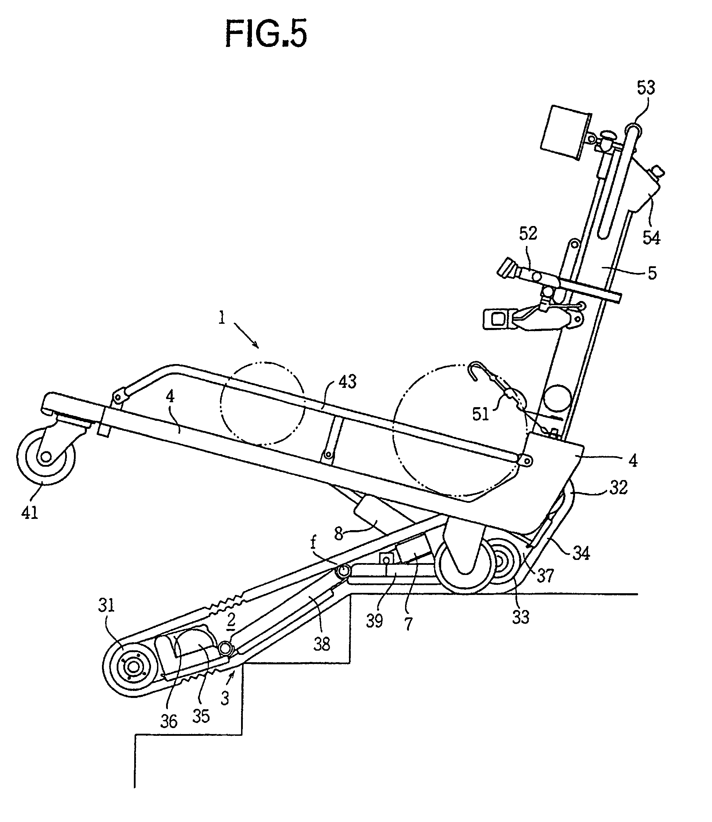

When the stair-climbing vehicle 1 is travelling on a horizontal ground surface or climbing up or down a stairway, the first electric actuator 7 is caused to extend, so that the front operating member 38 and the rear operating member 39 are kept colinear, thereby enabling the stair-climbing vehicle 1 to move in a stable manner. When the stairclimbing vehicle 1 reaches the uppermost step of a stairway, the vehicle 1 must change from an inclined position to a horizontal position. This movement will be detected by the sensor 6 which will then cause the first electric actuator 7 to retract. As a result, the front operating member 38 and the rear operating member 39 will articulate to form an inverted "V", as shown in Fig. 5. Because the belt 34 is caused to bend into an inverted "V", the stair-climbing vehicle 1 does not have to change its attitude abruptly and a smooth movement is effected from stairway to horizontal ground surface or vice versa .

The load-carrying platform 4 is provided on the vehicle body 2 and it is pivotable in vertical direction about the rear end.

The load-carrying platform 4 has a pair of front casters 41 and a pair of rear casters 42. When travelling on a horizontal ground surface, the second electric actuator 8 is retracted, so that the front casters 41 and the rear casters 42 will project beyond the ground contacting tread of the crawler device 3, upwardly separating the crawler device 3 from the ground surface, thereby enabling the vehicle 1 to run on the ground surface by means of the front caster 41 and the rear caster 42, as illustrated in Fig. 1.

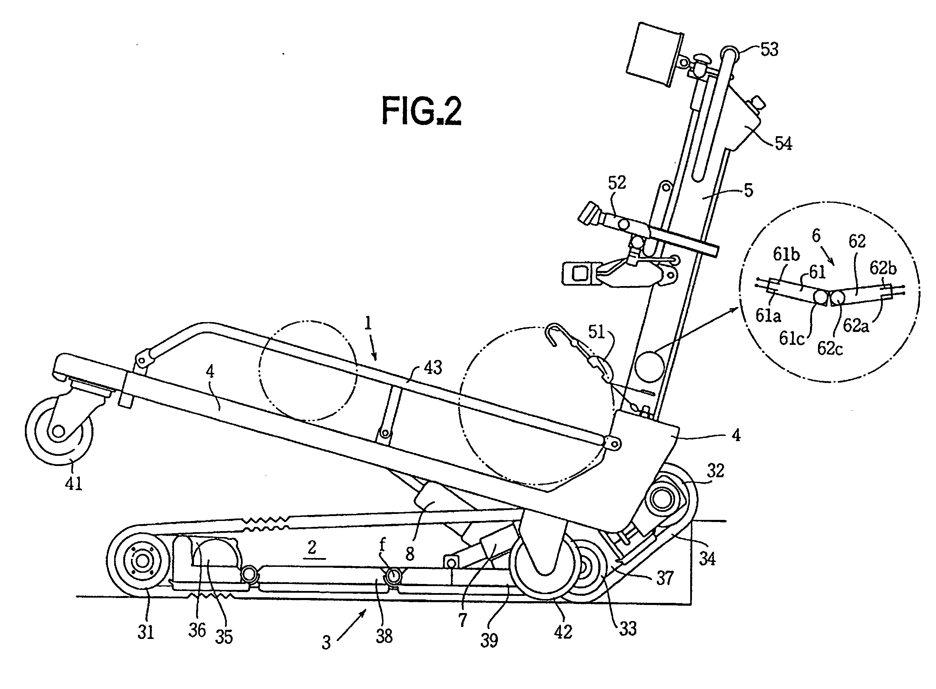

As illustrated in Fig. 2, when the stair-climbing vehicle 1 is about to climb up a stairway, the second electric actuator 8 will extend causing the load-carrying platform 4 to pivot upwardly about the rear end, raising the front casters 41 and the rear casters 42 from the ground and bringing the crawler device 3 in contact with the ground. In this manner, the vehicle 1 is able to start its climb up the stairway by driving the crawler device 3.

The load-carrying platform 4 is constructed to mount a wheelchair. A sliding plate (not shown) is received in the front portion of the load-carrying platform 4. When a wheelchair is about to be mounted on the load-carrying platform 4, the sliding plate slides out to serve as a slope plate between the ground surface and the front portion of the load-carrying platform 4. Thus, a wheelchair may be moved from the ground surface across the slope plate onto the load-carrying platform 4. In order to prevent the wheelchair from dropping off the load-carrying platform 4, a pair of safety bars 43 are provided one on each side of the load-carrying platform 4.

The upright stand 5 is provided on the rear end of the load-carrying platform 4. A first retaining device 51 and a second retaining device 52 are provided on the upright stand 5 in order to firmly hold the wheelchair on the load-carrying platform 4. An operating handle 53 and an operation panel 54 are provided on the upper portion of the upright stand 5, thus, when moving the vehicle 1, an operator (person) can grip the handle 53 and control the vehicle 1 by means of the operation panel 54 to move in a desired manner.

One of the most important features of the present invention is that an inclination sensor 6 which includes a first inclination sensing element 61 and a second inclination sensing element 62 is provided on the upright stand 5. The first inclination sensing element 61 is a tubular member having at one end a pair of electrically conductive terminals 61a, 61b. Similarly, the second inclination sensing element 62 is also a tubular member having at one end a pair of electrically conductive terminals 62a, 62b. Each of the tubular members contains a fluid electrically conductive material which in this case is mercury 61c or 62c in sufficient quantity to make conductive contact between the terminals 61a and 61b or between the terminals 62a and 62b. When the mercury material 61c or 62c contacts the terminals 61a and 61b or the terminals 62a and 62b, the terminals 61a and 61b or the terminals 62a and 62b will conduct. As a result, a motor 81 for driving the electric actuator 8 will be energised, which will be described in more detail later.

As shown in an enlarged part of Fig. 1, the first inclination sensing element 61 is arranged to form an angle α with the horizontal plane. Preferably, the angle α is 15° with the right end of the element 61 being higher as indicated in the drawing. The second inclination sensing element 62 is arranged to form an angle β with an extended line of the first inclination sensing element 61. Preferably, the angle β is 5° with the right end of the element 62 being higher as indicated in the drawing.

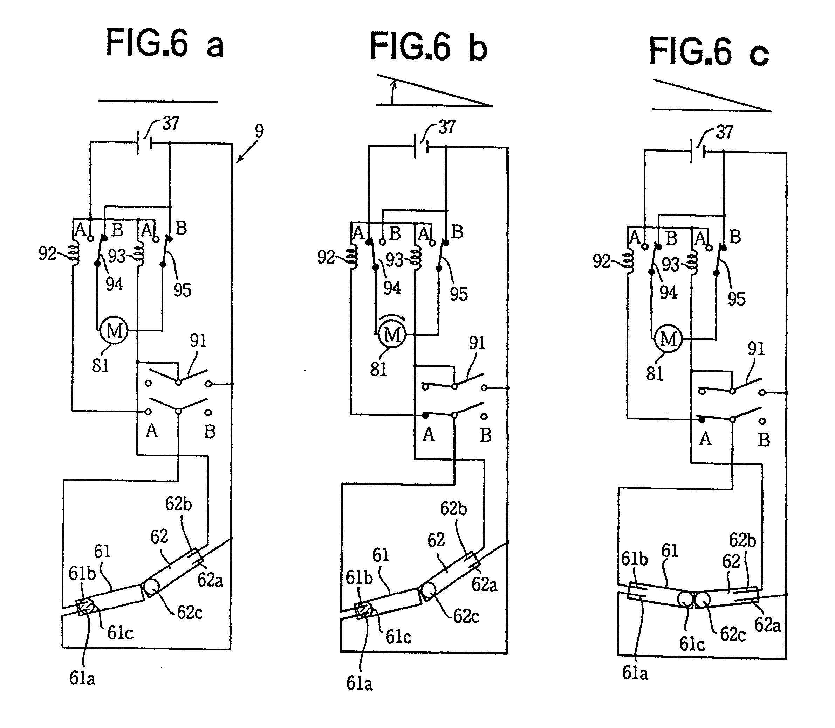

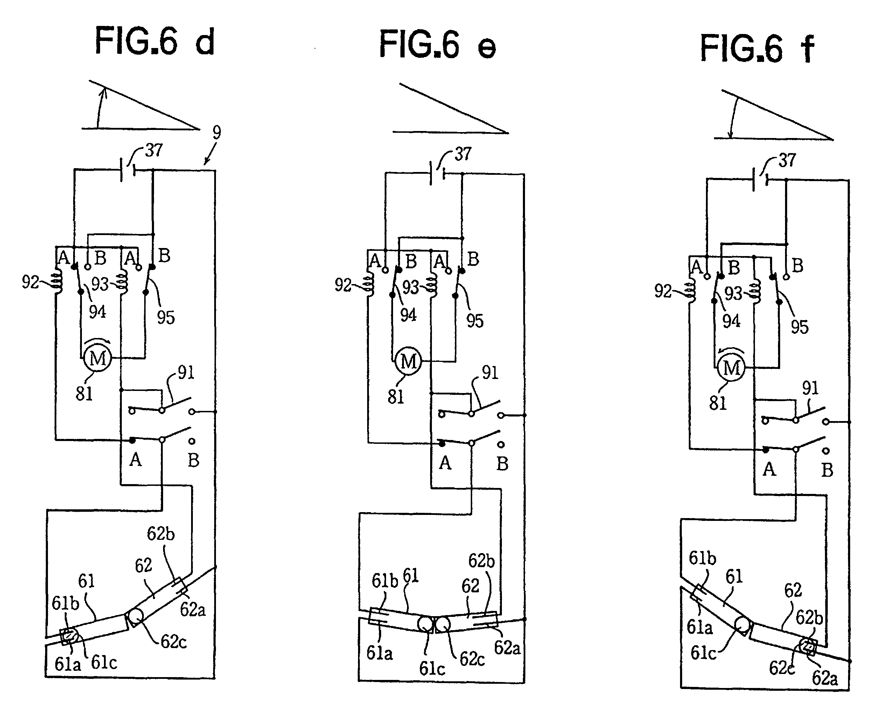

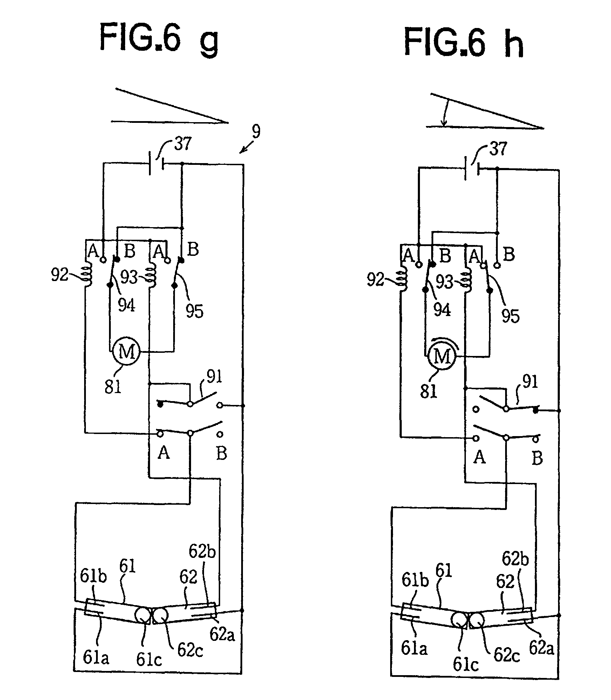

An electric circuit 9 in connection with the first and second inclination sensing elements 61 and 62 is indicated in detail in Fig. 6a. As illustrated in Fig. 6a, the electric circuit 9 includes the terminals 61a, 61b, 62a, 62b, a battery 37, a motor 81 which is used for driving the electric actuator 8. The circuit 9 includes a manual switch 91, electromagnetic coils 92, 93, change-over switches 94 and 95 operated by the electromagnetic coils 92, 93. In practice, the change-over switches 94 and 95 are normally in contact with points B in the circuit.

The operation of the stair-climbing vehicle 1 will be described in detail below with reference to Figs. 1 - 5 and Figs. 6a - 6h.

Referring to Fig. 1, when the stair-climbing vehicle 1 is moving on a horizontal ground surface, the load-carrying platform 4 and the vehicle body 2 are in a horizontal and mutually parallel position, so that the pair of front casters 41 and the pair of rear casters 42 (all provided on the underside of the load-carrying platform 4) are in contact with the ground.

When the stair-climbing vehicle 1 is about to travel from the horizontal ground onto a stairway so as to climb up or down the stairway, the manual switch 91 (connected to and provided on the surface of the operation panel 54) is switched ON (Fig. 6b). At this moment, since the first inclination sensing element 61 is in a position having an angle α 15° with a horizontal plane, the mercury material 61c will move downwardly to touch with the terminals 61a and 61b located at lower end of the tubular member, therefore the terminals 61a and 61b become electrically conductive. Thus, as shown in Fig. 6b, since the manual switch 91 is ON (in contact with side A), the electromagnetic coil 92 will be energised to generate a magnetic attracting force, so as to cause the change-over switch 94 to contact with side A. Consequently the motor 18 will begin to rotate in one predetermined direction so that the second electric actuator 8 will extend. Then, as fast as the load-carrying platform 4 is pivoted upwardly to form an angle of 15° with the vehicle body 2, the fluid mercury material 61c will move to the other end of the tubular member, so that the circuit 9 will be interrupted and the motor 81 will stop, as shown in Fig. 6c.

At this moment, the vehicle 1 will be in a position shown in Fig. 2. As shown in Fig 2, since the load-carrying platform 4 is pivoted upwardly to form an angle with the vehicle body 2, the front casters 41 and the rear casters 42 will be raised from the ground, bringing the crawler device 3 in contact with the ground. With the load-carrying platform 4 inclined rearwardly forming an angle of 15° with the vehicle body 2, a person sitting on a wheelchair will not be uncomfortable or frightened while the vehicle 1 is climbing up or down the stairway.

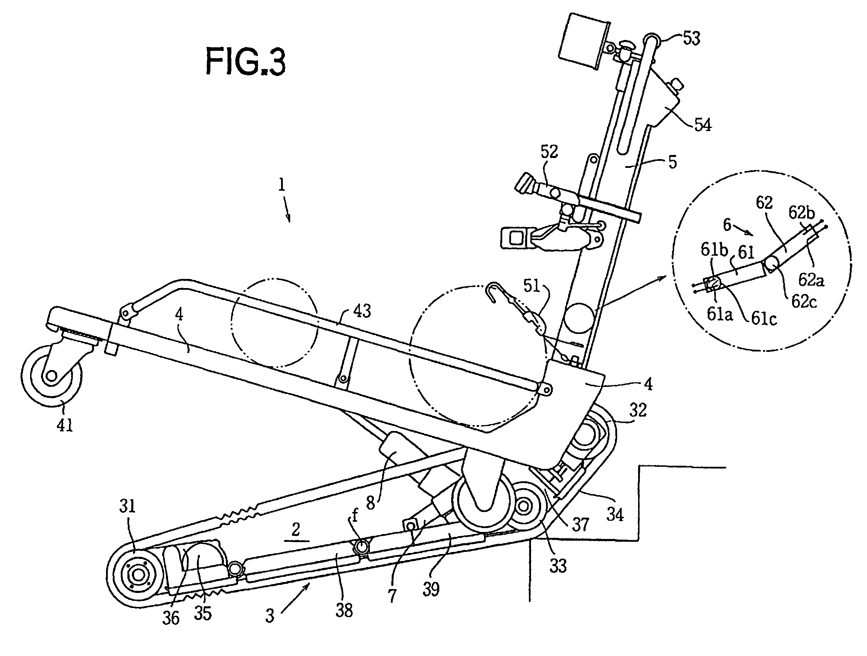

Referring to Fig. 3, when the stair-climbing vehicle 1 has begun its climb up or down the stairway by driving its crawler device 3, the load-carrying platform 4 is pivoted upwardly still further. During this process, as shown in Fig. 6d, the fluid mercury material 61c of the first inclination sensing element 61 moves back to touch the terminals 61a, 61b again, so that the circuit 9 is again energised and the motor 81 will begin to rotate again, causing the electric actuator 8 to extend still more, thus enabling the load-carrying platform 4 to pivot upwardly still further.

Thus, when the stair-climbing vehicle 1 begins to climb up or down a stairway, although there is a tendency for the load-carrying platform 4 to incline forwardly a little corresponding to a stairway inclination condition, but in fact this kind of forward inclination will be completely prevented since the load-carrying platform 4 has already inclined rearwardly forming an angle of 15° with the vehicle body 2.

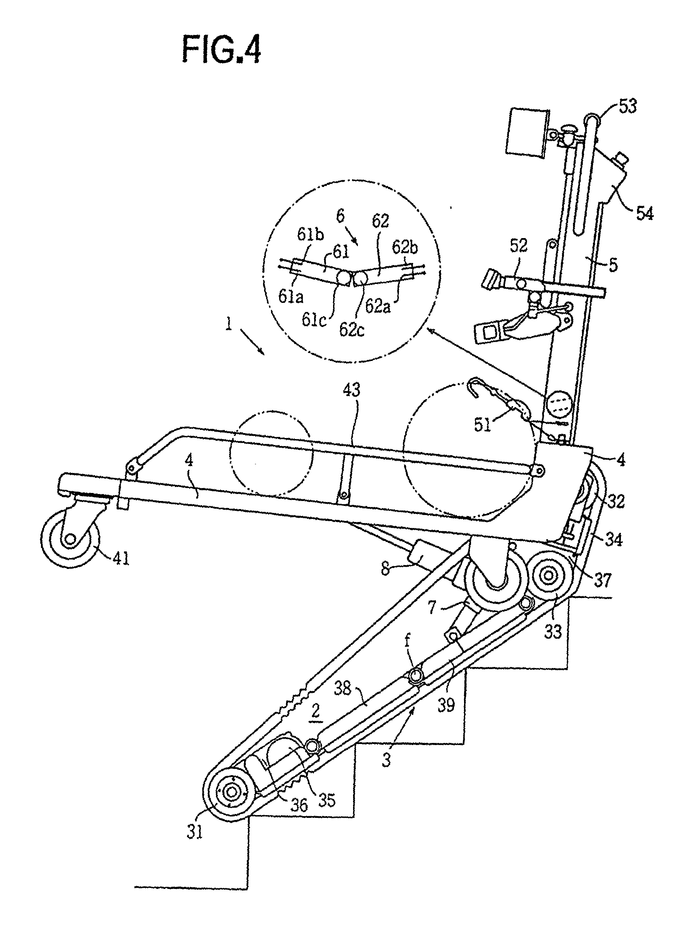

As shown in Fig. 4, when the load-carrying platform 4 is disposed in a horizontal position, or slightly inclined rearwardly forming a small angle with the vehicle body 2, the fluid mercury material 61c will move to the other end of the cylindrical member 61, so that the circuit 9 will be interrupted again and the motor 81 will stop, as shown in Fig. 6e.

In this way, a person sitting on a wheelchair will not have an uncomfortable or a terrible feeling while the vehicle 1 is climbing up or down a stairway.

Referring to Fig. 5, when the stair-climbing vehicle 1 reaches the uppermost step of a stairway, it is necessary for the vehicle 1 to change from its inclined position to its horizontal position. At this time, another sensor (not shown) will detect the arrival of the vehicle 1 at the uppermost step of the stairway, supplying an operation signal to the cylinder 7 to cause the first actuator 7 to retract, thereby enabling the front operating member 38 and the rear operating member 39 to articulate to form an inverted "V". With the articulation of the members 38, 39 to form the inverted "V", the belt 34 bends into an inverted "V" shape. As a result, the stair-climbing vehicle 1 does not abruptly change its inclination and to effects a smooth movement from stairway to horizontal ground surface, or vice versa.

When the stair-climbing vehicle 1 travels from a stairway to a horizontal ground surface, the load carrying platform 4 is inclined rearwardly, the fluid mercury material 62c will move to the other end of the cylindrical member 62 (Fig. 6f), permitting electric connection between terminals 62a and 62b. In this way, as shown in Fig. 6f, the circuit 9 is energised and the electromagnetic coil 95 will generate a magnetic force to attract the change-over switch 95 to the side A. Thus, the motor 81 will begin to rotate in an opposite direction to cause the electric actuator 8 to retract.

As fast as the load-carrying platform 4 is returned to its position as shown in Fig. 2 (an initially inclined position), the fluid mercury material 62c will move back to its original position in the cylindrical member (Fig. 6g), thus the circuit 9 will be interrupted and the electric power supply will be shut off.

Afterwards, as shown in Fig. 6h, by switching off the manual switch 91 (moving the switch 91 to contact side B), the motor 81 continues to rotate in the above opposite direction to cause the electric actuator 8 to retract still further, thus causing the load carrying platform 4 to change back to a completely horizontal position (as shown in Fig. 1).

As is understood from the above description, since the load-carrying platform 4 may be pivoted to form any desired angle with the vehicle body 2 in accordance with the actual incline of the stairway, it is possible to eliminate any uncomfortable or even terrible feelings a person might have when sitting on the wheelchair mounted on the stairclimbing vehicle climbing up or down a stairway.

Since the inclination sensing elements 61 and 62 employ a fluid mercury material 61c and 62c as an electrically conductive means, it is allowed not only to ensure a high reliability in use, but also to reduce the cost for the manufacture of a stair-climbing vehicle by dispensing with commercially available but quite expensive inclination sensors.

## Claims

1. A stair-climbing vehicle(I) for transporting a person seated on a wheelchair, comprising,
a crawler device(3) including a pair of endless belt crawlers disposed on opposite sides of the vehicle,
a vehicle body(2) including a driving motor for driving said crawler device(3) to enable said stairclimbing vehicle(1) to climb up or down a stairway,
a load carrying platform (4) provided above said vehicle body (2) for mounting said wheelchair, capable of pivoting relative to said vehicle body about one end in a vertical direction around a horizontal axis, and provided with an inclination sensor(6),
wherein said inclination sensor(6) includes a first inclination sensing element (61) and a second inclination sensing element (62), each inclination sensing element being a tubular member containing a flowable electrically conductive material and having a pair of electrically conductive terminals (61a, 61b, 62a, 62b)
wherein said first inclination sensing element (61) is nclined at an angle α with respect to said load carrying platform (4), and said second inclination sensing element (62) is inclined at an angle α+β with respect to said load carrying platform,
**characterized in that** the inclination α and α + β of the inclination sensing elements (61, 62) is arranged so that during an operation of said inclination sensor (6), when an inclination angle of said load carrying platform (4) is horizontal or smaller than α, said first inclination sensing element (61) outputs control signals to increase said inclination angle of said load carrying platform, and when the inclination angle of said load carrying platform (4) is larger than α+β, said second inclination sensing element (62) outputs control signals to decrease said inclination angle of said load carrying platform (4).

2. A stair climbing vehicle (1) according to claim 2 wherein the angle α is 13° to 18°.

3. A stair climbing vehicle (1) according to claim 1 or claim 2 wherein the angle β is 5° to 10°.

4. A stair climbing vehicle (1) according to claim any one of the preceding claims having a pair of articulated front and rear operating members (38, 39) arranged to articulate from a collinear position to an inverted "V" position and to guide the tread of the endless belt crawler (34) progressively over the crown of the tread and riser of a step as the vehicle (1) moves from the top step to the floor or vice-versa.

5. A stair climbing vehicle (1) according to any one of the preceding claims, wherein the crawler device (3)includes a front operation member (38) and a rear operating member (39), which are connected with each other and are capable of articulating from a collinear to an inverted "V" at a connection point (f).

6. A stair climbing vehicle (1) according to claim 5 wherein an extensible rod of an electric actuator (8) is connected to the rear operating member (39) near the connecting point (f), such that the front operating member (38) and the rear operating member (39) are normally kept collinear, but will articulate to an inverted "V" by retraction of the rod of the second actuator (8), to effect a smooth movement of the stair climbing vehicle (1) from a stairway to a horizontal ground surface.

7. A method of operating a stair climbing vehicle comprising the steps of:
starting the method with the stair climbing vehicle on a horizontal ground surface approaching a stairway,
switching a manual switch (91) ON to switch on an inclination sensor (6) so that a first inclination sensing element (61), which is disposed in a position at an angle α to a load carrying platform (4) of the vehicle becomes conductive,
switching on a motor (18) in response to said first inclination sensing element (61) being conductive to pivot the load carrying platform (4) in a first direction about a horizontal axis at one end towards an angle α greater than zero degrees with the horizontal until the inclination sensing element ceases to conduct,
switching the motor (18) off when the first inclination sensing element (61) ceases to conduct, so that the load carrying platform (4) tends to be maintained at an angle inclined to the horizontal not less than α,
bringing a crawler device (3) into contact with the ground at any time before causing the vehicle to begin climbing the stairway,
switching the motor (18) on in response to a second inclination sensing element (62) becoming conductive as the load carrying platform (4) exceeds an angle α + β with the horizontal so that the platform is rotated about the horizontal axis in a direction opposite to the first direction,
switching the motor (18) off when the second inclination sensing element (62) ceases to conduct so that the platform tends to be inclined at an angle to the horizontal not exceeding α + β.

8. A method according to claim 7 comprising the steps of, after climbing the stairway,
switching the manual switch (91) off,
controling the motor (18) in response to the manual switch (91) being switched off to pivot the load carrying platform (4) to a horizontal position.

## Patentansprüche

1. Treppensteig-Fahrzeug (1) zum Transport einer in einem Rollstuhl sitzenden Person, umfassend:
eine Raupenvorrichtung (3) mit einem Paar Endlosband-Raupen, die auf gegenüberliegenden Seiten des Fahrzeugs angeordnet sind,
einen Fahrzeugkörper (2) mit einem Antriebsmotor für den Antrieb der Raupenvorrichtung (3), um es dem Treppensteig-Fahrzeug (1) zu ermöglichen, eine Treppe hinauf- oder hinabzusteigen,
eine über dem Fahrzeugkörper (2) vorgesehene lasttragende Plattform (4) zur Aufnahme des Rollstuhls, die in bezug auf den Fahrzeugkörper um ein Ende in einer vertikalen Richtung um eine horizontale Achse schwenken kann und mit einem Neigungssensor (6) versehen ist,
wobei der Neigungssensor (6) einen ersten Neigungsmeßfühler (61) und einen zweiten Neigungsmeßfühler (62) umfaßt, wobei jeder Neigungsmeßfühler ein röhrenförmiges Element ist, das ein fließfähiges elektrisch leitendes Material enthält und ein Paar elektrisch leitende Anschlußklemmen (61a, 61 b, 62a, 62b) aufweist,
wobei der erste Neigungsmeßfühler (61) um einen Winkel α in bezug auf die lasttragende Plattform (4) geneigt ist und der zweite Neigungsmeßfühler (62) um einen Winkel α+β in bezug auf die lasttragende Plattform geneigt ist,
**dadurch gekennzeichnet, daß** die Neigung α und α+β der Neigungsmeßfühler (61, 62) so eingerichtet ist, daß während einer Betätigung des Neigungssensors (6) bei einem Neigungswinkel der lasttragenden Plattform (4), der horizontal oder kleiner als α ist, der erste Neigungsmeßfühler (61) ein Steuersignal ausgibt, um diesen Neigungswinkel der lasttragenden Plattform zu vergrößern, und bei einem Neigungswinkel der lasttragenden Plattform (4), der größer als α+β ist, der zweite Neigungsmeßfühler (62) ein Steuersignal ausgibt, um diesen Neigungswinkel der lasttragenden Plattform (4) zu verringern.

2. Treppensteig-Fahrzeug (1) nach Anspruch 2, bei dem der Winkel α 13° bis 18° beträgt.

3. Treppensteig-Fahrzeug (1) nach Anspruch 1 oder Anspruch 2, bei dem der Winkel β 5° bis 10° beträgt.

4. Treppensteig-Fahrzeug (1) nach irgendeinem der vorhergehenden Ansprüche, mit einem Paar angelenkten vorderen und hinteren Betätigungselementen (38, 39), die so angeordnet sind, daß sie aus einer kollinearen Position in eine umgekehrte "V"-Position schwenken und die Aufstandsfläche der Endlosband-Raupe (34) schrittweise über den Scheitel von Auftritt und Stich einer Stufe lenken, während sich das Fahrzeug (1) von der obersten Stufe auf den Geschoßboden oder umgekehrt bewegt.

5. Treppensteig-Fahrzeug (1) nach irgendeinem der vorhergehenden Ansprüche, bei dem die Raupenvorrichtung (3) ein vorderes Betätigungselement (38) und ein hinteres Betätigungselement (39) einschließt, die miteinander verbunden sind und an einem Verbindungspunkt (f) aus einer Kollinearen zu einem umgekehrten "V" schwenken können.

6. Treppensteig-Fahrzeug (1) nach Anspruch 5, bei dem eine ausfahrbare Stange eines elektrischen Stellorgans (8) mit dem hinteren Betätigungselement (39) nahe dem Verbindungspunkt (f) verbunden ist, derart, daß das vordere Betätigungselement (38) und das hintere Betätigungselement (39) normalerweise kollinear gehalten werden, jedoch bei Einziehen der Stange des zweiten Stellorgans (8) zu einem umgekehrten "V" schwenken werden, um eine sanfte Bewegung des Treppensteig-Fahrzeugs (1) von einer Treppe auf eine horizontale Grundfläche zu bewirken.

7. Verfahren zur Betätigung eines Treppensteig-Fahrzeugs, das die folgenden Schritte umfaßt:
Beginn des Verfahrens mit dem Treppensteig-Fahrzeug auf einer horizontalen Grundfläche bei Annäherung an eine Treppe,
Schalten eines manuellen Schalters (91) auf EIN, um einen Neigungssensor (6) einzuschalten, so daß ein erster Neigungsmeßfühler (61), der in einer Position in einem Winkel α zu einer lasttragenden Plattform (4) des Fahrzeugs angeordnet ist, leitend wird,
Einschalten eines Motors (18) in Antwort darauf, daß der erste Neigungsmeßfühler (61) leitend ist, um die lasttragende Plattform (4) in einer ersten Richtung um eine horizontale Achse an einem Ende bis zu einem Winkel α von mehr als Null Grad mit der Horizontalen zu schwenken, bis der Neigungsmeßfühler aufhört zu leiten,
Ausschalten des Motors (18), wenn der erste Neigungsmeßfühler (61) aufhört zu leiten, so daß die lasttragende Plattform (4) danach strebt, bei einem Winkel gehalten zu werden, der nicht weniger als α zur Horizontalen geneigt ist,
Inkontaktbringen einer Raupenvorrichtung (3) mit dem Boden zu irgendeinem Zeitpunkt, bevor man das Fahrzeug mit dem Treppensteigen beginnen läßt,
Anschalten des Motors (18) in Antwort darauf, daß ein zweiter Neigungsmeßfühler (62) leitend wird, wenn die lasttragende Plattform (4) einen Winkel α+β mit der Horizontalen überschreitet, so daß die Plattform um die horizontale Achse in einer der ersten Richtung entgegengesetzten Richtung gedreht wird,
Ausschalten des Motors (18), wenn der zweite Neigungsmeßfühler (62) aufhört zu leiten, so daß die Plattform danach strebt, um einen Winkel zur Horizontalen geneigt zu sein, der α+β nicht überschreitet.

8. Verfahren nach Anspruch 7, das nach dem Treppensteigen die folgenden Schritte umfaßt:
Ausschalten des manuellen Schalters (91),
Steuerung des Motors (18) in Antwort auf das Ausschalten des manuellen Schalters (91), um die lasttragende Plattform (4) in eine horizontale Position zu schwenken.

## Revendications

1. Véhicule de montée d'escalier (1) destiné à transporter une personne assise dans un fauteuil roulant, comprenant,
un dispositif de chenilles (3) comprenant une paire de chenilles à bande sans fin disposées sur les côtés opposés du véhicule,
un châssis de véhicule (2) comprenant un moteur d'entraînement destiné à entraîner ledit dispositif de chenilles (3) pour permettre audit véhicule de montée d'escalier (1) de monter ou de descendre un escalier,
une plate-forme de transport de charge (4) prévue sur ledit châssis de véhicule (2) destinée à monter ledit fauteuil roulant, capable de pivoter par rapport audit châssis de véhicule en une extrémité dans une direction verticale autour de l'axe horizontal, et munie d'un capteur d'inclinaison (6),
dans lequel ledit capteur d'inclinaison (6) comprend un premier élément de détection d'inclinaison (61) et un second élément de détection d'inclinaison (62), chaque élément de détection d'inclinaison étant un élément tubulaire comprenant un matériau électriquement conducteur présentant une aptitude à l'écoulement et comportant une paire de bornes électriquement conductrices (61a, 61b, 62a, 62b)
dans lequel ledit premier élément de détection d'inclinaison (61) est incliné selon un angle α par rapport à ladite plate-forme de transport de charge (4), et ledit second élément de détection d'inclinaison (62) est incliné selon un angle ***α*** + β par rapport à ladite plate-forme de transport de charge,
**caractérisé en ce que** l'inclinaison α et α + β des éléments de détection d'inclinaison (61, 62) est agencée de façon à ce que pendant le fonctionnement dudit détecteur d'inclinaison (6), lorsqu'un angle d'inclinaison de ladite plate-forme de transport de charge (4) est horizontal ou inférieur à α, ledit premier élément de détection d'inclinaison (61) fournit en sortie des signaux de commande pour augmenter ledit angle d'inclinaison de ladite plate-forme de transport de charge, et lorsque l'angle d'inclinaison de ladite plate-forme de transport de charge (4) est supérieur à α + β, ledit second élément de détection d'inclinaison (62) fournit en sortie des signaux de commande destinés à diminuer ledit angle d'inclinaison de ladite plate-forme de transport de charge (4).

2. Véhicule de montée d'escalier (1) selon la revendication 2 dans lequel l'angle α est de 13° à 18°.

3. Véhicule de montée d'escalier (1) selon la revendication 1 ou la revendication 2 dans lequel l'angle β est de 5° à 10°.

4. Véhicule de montée d'escalier (1) selon l'une quelconque des revendications précédentes présentant une paire d'éléments de commande avant et arrière articulés (38, 39) agencés pour s'articuler d'une position en alignement vers une position de "V" inversé et pour diriger la bande de roulement de la chenille à ruban sans fin (34) progressivement sur le sommet et la contremarche d'une marche pendant que le véhicule (1) se déplace de la marche du haut vers le sol ou vice versa.

5. Véhicule de montée d'escalier (1) selon l'une quelconque des revendications précédentes, dans lequel le dispositif de chenilles (3) comprend un élément de commande avant (38) et un élément de commande arrière (39), qui sont reliés l'un à l'autre et peuvent s'articuler d'une position en alignement en une position de "V" inversé au niveau d'un point de connexion (f).

6. Véhicule de montée d'escalier (1) selon la revendication 5, dans lequel une tige extensible d'un actionneur électrique (8) est reliée à l'élément de commande arrière (39) près du point de connexion (f), de sorte que l'élément de commande avant (38) et l'élément de commande arrière (39) restent normalement en alignement, mais s'articuleront en un "V" inversé par la rétraction de la barre du second actionneur (8), pour effectuer un léger mouvement du véhicule de montée d'escalier (1) d'un escalier vers une surface de sol horizontale.

7. Procédé d'actionnement d'un véhicule de montée d'escalier comprenant les étapes consistant à :
débuter le procédé, le véhicule de montée d'escalier étant sur une surface de sol horizontale, et s'approchant de l'escalier,
fermer un commutateur manuel (91) afin d'activer un détecteur d'inclinaison (6) de sorte qu'un premier élément de détection d'inclinaison (61), qui est fixé dans une position selon un angle α de la plate-forme de transport de charge (4) du véhicule, devienne conducteur,
mettre en marche un moteur (18) en réponse audit premier élément de détection d'inclinaison (61) étant conducteur pour faire pivoter la plate-forme de transport de charge (4) dans une première direction vers un axe horizontal à une extrémité vers un angle α plus grand que zéro degré par rapport à l'horizontale jusqu'à ce que l'élément de détection d'inclinaison cesse d'être conducteur,
arrêter le moteur (18) lorsque le premier élément de détection d'inclinaison (61) cesse d'être conducteur, de sorte que la plate-forme de transport de charge (4) a tendance à être maintenue à un angle incliné par rapport à l'horizontale qui n'est pas inférieur à α,
amener un dispositif de chenilles (3) en contact avec le sol à n'importe quel moment avant d'amener le véhicule à commencer la montée de l'escalier,
mettre en marche le moteur (18) en réponse à un second élément de détection d'inclinaison (62) qui devient conducteur lorsque la plate-forme de charge (4) dépasse un angle α + β par rapport à l'horizontale de sorte que la plate-forme est amenée en rotation autour de l'axe horizontal dans une direction opposée à la première direction,
arrêter le moteur (18) lorsque le second élément de détection d'inclinaison (62) cesse d'être conducteur de sorte que la plate-forme tende à être inclinée à un angle par rapport à l'horizontale n'excédant pas α + β.

8. Procédé selon la revendication 7 comprenant les étapes consistant à, après la montée de l'escalier,
ouvrir le commutateur manuel (91),
commander le moteur (18) en réponse au commutateur manuel (91) qui est ouvert afin de faire pivoter la plate-forme de transport de charge (4) vers une position horizontale.
